# EUROPÄISCHE PATENTSCHRIFT

(11) **EP 2 715 700 B1**
(45) Veröffentlichungstag und Bekanntmachung des Hinweises auf die Patenterteilung: **24.02.2016**
(21) Anmeldenummer: 12720108.5
(22) Anmeldetag: 08.05.2012
(51) Int. Cl.: G08G 1/16, B60W 30/16

(54) **VERFAHREN ZUM BETRIEB EINES LÄNGSFÜHRENDEN FAHRERASSISTENZSYSTEMS EINES KRAFTFAHRZEUGS UND KRAFTFAHRZEUG**
METHOD FOR OPERATING A LONGITUDINAL DRIVER ASSISTANCE SYSTEM OF A MOTOR VEHICLE AND MOTOR VEHICLE
PROCÉDÉ PERMETTANT LE FONCTIONNEMENT D'UN SYSTÈME D'AIDE À LA CONDUITE LONGITUDINALE D'UN VÉHICULE À MOTEUR ET VÉHICULE À MOTEUR

(30) Priorität: 25.05.2011 DE 102011102426
(43) Veröffentlichungstag der Anmeldung: 09.04.2014
(73) Patentinhaber: Audi AG, 85045 Ingolstadt (DE)
(72) Erfinder: SCHUBERTH, Stefan, 85057 Ingolstadt (DE)
(74) Vertreter: Thielmann, Frank
(86) Internationale Anmeldenummer: PCT/EP2012/001961
(87) Internationale Veröffentlichungsnummer: WO 2012/159706

(56) Entgegenhaltungen:
- WO-A1-03/047900
- DE-A1- 19 940 723
- DE-A1-102007 046 763
- DE-A1-102008 041 174
- DE-A1-102009 008 403
- DE-A1-102010 020 047
- US-A1- 2009 271 084
- US-A1- 2009 271 084

## Beschreibung

Die Erfindung betrifft ein Verfahren zum Betrieb eines längsführenden Fahrerassistenzsystems eines Kraftfahrzeugs, insbesondere eines ACC-Systems, welches in einem Freifahrbetrieb zur Regelung der Geschwindigkeit eines Kraftfahrzeugs auf eine Wunschgeschwindigkeit und/oder in einem Folgebetrieb zur Regelung der Geschwindigkeit des Kraftfahrzeugs zum Einhalten eines Regelabstands gegenüber einem voranfahrenden Kraftfahrzeug als Regelobjekt ausgebildet ist. Daneben betrifft die Erfindung ein Kraftfahrzeug mit einem solchen Fahrerassistenzsystem.

Längsführende Fahrerassistenzsysteme für Kraftfahrzeuge, die mithin die Geschwindigkeit des Kraftfahrzeugs größtenteils selbständig regeln, sind bereits in vielerlei Ausgestaltungen bekannt. Die einfachste Ausgestaltung eines solchen längsführenden Fahrerassistenzsystems wird häufig als Geschwindigkeitsregelanlage (GRA) oder Tempomat bezeichnet. Dabei wird die Geschwindigkeit des Kraftfahrzeugs auf eine durch den Fahrer wählbare Wunschgeschwindigkeit geregelt. Erweitert wurden derartige Systeme, insbesondere unter dem Namen ACC-System (Adaptive Cruise Control), um einen Folgebetrieb, in dem dann, wenn die Wunschgeschwindigkeit wegen eines voranfahrenden Kraftfahrzeugs nicht eingenommen werden kann, auf einen festgelegten oder ebenso durch den Fahrer wählbaren Regelabstand zu dem voranfahrenden Fahrzeug als Regelobjekt geregelt wird, wobei häufig eine bestimmte Zeitlücke herangezogen wird.

Bekannt ist es auch, bei sogenannten Precrash- oder Notbremssystemen, Längsführungseingriffe durchzuführen, um eine Kollision mit einem Objekt zu vermeiden und/oder die Kollisionsfolgen zu mindern. Derartige Notbremssysteme sind Sicherheitssysteme, die Umgebungssensoren nutzen, um eine Kollisionswahrscheinlichkeit zu bestimmen und bei Überschreitung eines oder mehrerer Schwellwerte verschiedene Maßnahmen, insbesondere Bremseingriffe, vorzunehmen. Als weitere Maßnahmen sind eine Warnung des Fahrers, eine Vorkonditionierung von Fahrzeugsystemen, insbesondere des Bremssystems, des Gurtsystems, der Airbags und dergleichen, vorgesehen.

Bei den heute bekannten längsführenden Fahrerassistenzsystemen, insbesondere also ACC- oder Precrash-Systemen, mit Umfeldsensorik ist die Reaktion auf das Geschehen im Vorfeld immer gleich. Es wird meist ein Objekt, insbesondere ein Regelobjekt, ausgewählt, auf Basis dessen ein Eingriff im Kraftfahrzeug vorgenommen wird. Beim Eingriff wird also nachteilhafterweise nicht unterschieden, in welcher Situation, insbesondere welcher Verkehrssituation, sich das Kraftfahrzeug gerade befindet, was die Nachvollziehbarkeit der Aktion des Fahrerassistenzsystems für den Kunden erschwert und im Hinblick auf die Sicherheit noch verbesserungsfähig erscheint.

US 2009/0271084 A1 betrifft ein längsführendes Fahrerassistenzsystem, welches einen Verkehrszustand, der eine Fahrzeugdichte auf einer Straße umfasst, ermittelt und die Längsführung des Kraftfahrzeugs so anpasst, dass ein Stau möglichst vermieden wird. Hierfür kann beispielsweise dann, wenn eine kritische Verkehrsdichte überschritten ist, ein Zielabstand zum Vordermann angepasst werden. Information über die Fahrzeugdichte kann durch Kommunikation ermittelt werden.

DE 10 2007 046 763 A1 betrifft ein Steuerverfahren zum Steuern mindestens eines Kraftfahrzeugs oder einer Mehrzahl von Kraftfahrzeugen, wobei eine Satellitennavigation verwendet wird. Die Satellitennavigationseinrichtung empfängt zusätzlich mitgesendete Zuverlässigkeitssignale. Es kann auch eine Kommunikation zwischen Kraftfahrzeugen und einer Zentralstation stattfinden.

DE 10 2009 008 403 A1 betrifft ein Verfahren zur Steuerung und Regelung des Verkehrsflusses. Dabei soll nach einem Erkennen und dem Eintreten einer besonderen Situation ein Fahrerassistenzsystem automatisch die Längsführung des Fahrzeugs übernehmen, wobei bei Beendigung der besonderen Situation der Fahrer die Kontrolle über das Fahrzeug zurückerhält, die vor der Aktivierung des Fahrerassistenzsystems bestand. Beispiele für solche Sondersituationen sind das Passieren von geschwindigkeitsbegrenzten Bereichen im Straßenverkehr oder Kreuzungen und Arnpelanlagen. Das Fahrerassistenzsystem kann ein ACC-System sein.

Der Erfindung liegt daher die Aufgabe zugrunde, ein Verfahren zum Betrieb eines Fahrerassistenzsystems anzugeben, in dem auch auf spezielle Situationen und Verkehrsverhältnisse reagiert werden kann.

Zur Lösung dieser Aufgabe sind bei einem Verfahren der eingangs genannten Art erfindungsgemäß die Merkmale des Anspruchs 1 vorgesehen.

Erfindungsgemäß wird also vorgeschlagen, eine von extern empfangene Verkehrsinformation, beispielsweise eine einen vorausliegenden Stau und/oder einen vorausliegenden Gefahrenfall und/oder den Status einer vorausliegenden Ampel meldende Verkehrsinformation, zu nutzen, um das Fahrerassistenzsystem, insbesondere ein ACC-System und/oder ein Notbremssystem, umzuparametrisieren, so dass das Fahrerassistenzsystem auf drohende Verkehrsveränderungen vorbereitet ist. Wird beispielsweise ein Stau und/oder Gefahrenfall gemeldet, so kann das Fahrerassistenzsystem auf den Stau vorbereitet werden, nachdem - insbesondere im Hinblick auf ein ACC-System - ein schneller Geschwindigkeitsabbau demnächst erwartet werden kann.

Das erfindungsgemäße Verfahren erlaubt also eine situative Beeinflussung eines Fahrerassistenzsystems, insbesondere eines ACC-Systems und/oder eines Notbremssystems, aufgrund von externen, insbesondere über Funk, empfangenen Verkehrsinformationen, insbesondere Verkehrsdaten bzw. Gefahrenwarnungen, so dass die Funktion für die spezielle Situation optimiert werden kann. Das Verhalten des Fahrerassistenzsystems entspricht eher den Erwartungen des Fahrers und es ist eine bessere Reaktion in Gefahrensituationen möglich, insbesondere also eine Erhöhung der Sicherheit des Fahrerassistenzsystems.

Dabei kann konkret vorgesehen sein, dass die Verkehrsinformation mittels einer Kommunikationseinrichtung, insbesondere einem Funkempfänger, von dem feststehenden und/oder bewegten Sender empfangen wird. Das bedeutet, dass die vorliegende Erfindung zum Empfang der externen Verkehrsinformation heute insgesamt unter "Car2X"-Systeme zusammengefasste Systeme nutzt, bei denen Kraftfahrzeuge mit entsprechenden Kommunikationseinrichtungen sowohl untereinander Informationen austauschen können als auch mit feststehenden Kommunikationseinrichtungen, wobei mit besonderem Vorteil vorgesehen ist, dass als Sender ein Server verwendet wird, der die Verkehrsinformation mithin einer Vielzahl von Kraftfahrzeugen zur Verfügung stellt. Zweckmäßigerweise kann die Verkehrsinformation auf dem Server unter Berücksichtigung von von wenigstens einem weiteren Kraftfahrzeug empfangenen, gegebenenfalls aufbereiteten Sensordaten ermittelt werden. Das bedeutet, der Server, der die Verkehrsinformation letztlich sendet, sammelt Daten, insbesondere Sensordaten, von einer Vielzahl von Kraftfahrzeugen auf verschiedenen Straßen und wertet diese beispielsweise straßenabschnittsbezogen aus, um für Kraftfahrzeuge nützliche Verkehrsinformationen zu erhalten, die beispielsweise auch in Navigationssystemen verwendet werden können, um Staus zu umfahren oder dergleichen. Das Straßennetz wird dabei also in verschiedene Straßenabschnitte unterteilt, denen jeweils wenigstens eine Verkehrsinformation zugeordnet ist, die beispielsweise beschreibt, ob dort ein Stau herrscht, ein Gefahrenfall vorliegt oder dergleichen. Selbstverständlich kann sich eine Verkehrsinformation auch auf einen konkreten Ort beziehen, beispielsweise, wenn sie den aktuellen Zustand einer Ampel, die im Übrigen auch als Sender agieren kann, wiedergibt. Dabei sei an dieser Stelle angemerkt, dass insbesondere ein Server, der als Sender agiert und Verkehrsinformationen bezüglich eines Staus oder Gefahrenfalls enthält, diese Daten nicht nur aus den Daten anderer Kraftfahrzeuge bestimmen kann, sondern auch vorgesehen sein kann, dass beispielsweise Verkehrsinformationen aus dem Internet oder von einem lokalen Dienst, beispielsweise einer Verkehrsüberwachung, bezogen werden.

In konkreter Ausgestaltung der vorliegenden Erfindung ist vorgesehen, dass bei einer einen vorausliegenden Stau und/oder einen vorausliegenden Gefahrenfall anzeigenden Verkehrsinformation die Eindringtiefe bei einer Annäherung an ein voranfahrendes Fahrzeug reduziert wird, insbesondere auf Null, und/oder eine maximal mögliche Beschleunigung erniedrigt wird und/oder eine maximal mögliche Bremsverzögerung reduziert wird und/oder eine Einschererkennung zur Erkennung schneller Spurwechsel umparametrisiert wird, wobei insbesondere eine Plausibilisierungsschwelle erniedrigt wird und/oder ein Regelabstand zu dem voranfahrenden Fahrzeug erhöht wird.

Wie bereits beschrieben wurde, kann das Fahrerassistenzsystem, insbesondere ein ACC-System, mithin auf einen Stau vorbereitet werden. So kann die Eindringtiefe bei einer Annäherung an ein voranfahrendes Fahrzeug reduziert werden, beispielsweise auch auf einen Wert von Null, so dass zwar der Komfort etwas eingeschränkt wird, jedoch eine schnellere Reaktion stattfindet. Ferner kann auch die maximale Beschleunigung, mit der man einem voranfahrenden Fahrzeug folgt, erniedrigt werden, da bei einem Stau davon auszugehen ist, dass dieses wenn dann nur kurzfristig beschleunigen wird. Denkbar ist es auch, dass eine maximale Bremsverzögerung reduziert wird, so dass eine langsamere Annäherung erfolgt. Weiter ist es möglich, dass auch die Einschererkennung umparametrisiert werden kann, da es vor Staus oder in Staus häufig vorkommt, dass andere Fahrzeuge die Spur wechseln. Es kann mithin die Plausibilisierungsschwelle herabgesetzt werden, das bedeutet, dass ein Spurwechsler bereits bei einer niedrigeren Wahrscheinlichkeit als Regelobjekt plausibel werden kann. Denkbar ist es ferner, den Regelabstand zu dem voranfahrenden Fahrzeug zu erhöhen, nachdem dieses beispielsweise dann, wenn auf den Stau aufgefahren wird, voraussichtlich stark bremsen wird. Somit passt sich das Fahrerassistenzsystem den Verkehrsverhältnissen an und kann seine Funktion so anpassen, dass sie in dieser Situation das beste Fahrverhalten verspricht, insbesondere im Hinblick auf die Sicherheit.

In einer weiteren Möglichkeit zur konkreten Ausgestaltung des erfindungsgemäßen Verfahrens kann dann, wenn als Fahrerassistenzsystem ein Notbremssystem verwendet wird und bei einer einen vorausliegenden Gefahrenfall, insbesondere eine Person und/oder ein Tier und/oder einen Gegenstand auf der Fahrbahn, anzeigenden Verkehrsinformation vorgesehen sein, dass die Klassifikationsschwelle von stehenden, nichtüberfahrbaren Objekten herabgesetzt wird und/oder ein Eingriffszeitpunkt und/oder ein Warnzeitpunkt zu einem früheren Zeitpunkt hin verschoben wird. Bei einem Notbremssystem kann mithin bei drohender Gefahr aufgrund von beispielsweise Wild, Fußgängern oder Gegenständen auf der Straße oder auch einem Stau ebenfalls die Parametrisierung geändert werden. So können die Klassifikationsschwellen von stehenden, nichtüberfahrbaren Objekten herabgesetzt werden, um eine sicherere oder überhaupt eine Reaktion auf stehende Objekte zu ermöglichen. Ebenfalls können Eingriffszeitpunkte nach vorn gesetzt werden, um ein früheres Warnen und Eingreifen der Funktionen auf drohende Gefahren und somit eine bessere Beherrschbarkeit der kritischen Situation zu ermöglichen.

In weiterer vorteilhafter konkreter Ausgestaltung der vorliegenden Erfindung kann vorgesehen sein, dass bei einer eine vorausliegende rote Ampel anzeigenden Verkehrsinformation eine Plausibilisierungsschwelle für stehende Objekte erniedrigt wird und/oder das Annäherungsverhalten an stehende Objekte beschreibende Regelungsparameter angepasst werden, insbesondere im Hinblick auf eine langsamere und/oder komfortablere Annäherung. Somit kann die Information, dass stehende Objekte erwartet werden, vorteilhaft genutzt werden, um eine geeignete Umparametrisierung des Fahrerassistenzsystems vorzunehmen. Ferner kann vorgesehen sein, das Wissen um eine Rotphase zu nutzen, um das Annäherungsverhalten an stehende (oder sehr langsam fahrende) Objekte, insbesondere also vor der Ampel wartende Kraftfahrzeuge, zu beeinflussen. Die Lücke soll also nicht, wie beispielsweise bei ACC-Systemen häufig gewünscht, besonders schnell geschlossen werden, sondern es ist eine längere Zeit nutzbar, so dass bei einer längeren Rotphase ein komfortableres Schließen der Lücke möglich ist.

Neben dem Verfahren betrifft die Erfindung noch ein Kraftfahrzeug, umfassend ein längsführendes Fahrerassistenzsystem mit einer zur Durchführung des erfindungsgemäßen Verfahrens ausgebildeten Steuereinrichtung. Mithin kann das Kraftfahrzeug auch eine Kommunikationseinrichtung zum Empfangen der von extern zur Verfügung gestellten Verkehrsinformation aufweisen. Sämtliche Ausführungen bezüglich des erfindungsgemäßen Verfahrens lassen sich analog auf das erfindungsgemäße Kraftfahrzeug übertragen, so dass auch mit diesem die Vorteile der Erfindung erhalten werden können.

Weitere Vorteile und Einzelheiten der vorliegenden Erfindung ergeben sich aus den im folgenden beschriebenen Ausführungsbeispielen sowie anhand der Zeichnung. Dabei zeigen:
- Fig. 1: eine Prinzipskizze eines erfindungsgemäßen Kraftfahrzeugs, und
- Fig. 2: einen Ablaufplan des erfindungsgemäßen Verfahrens.

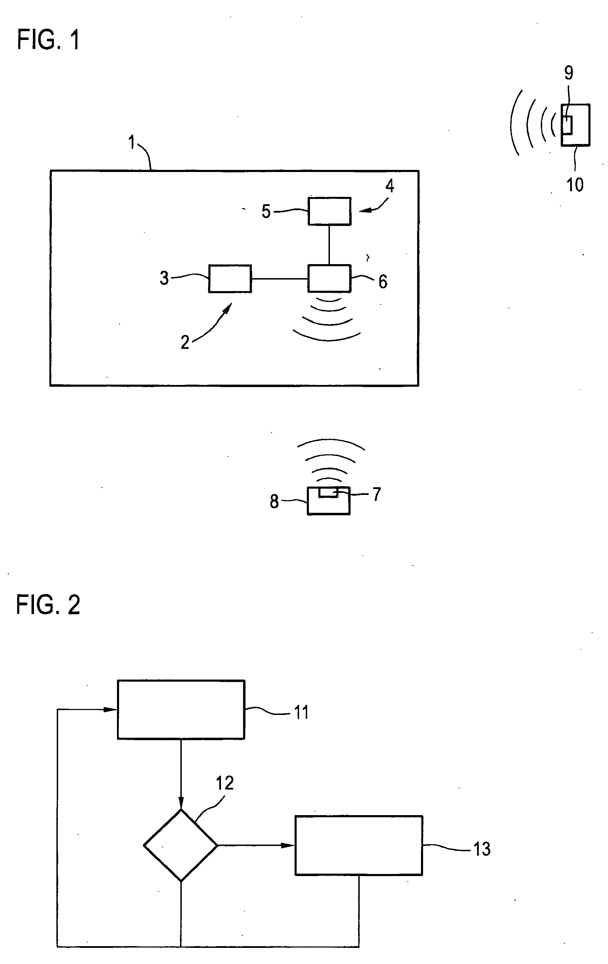

Fig. 1 zeigt eine Prinzipskizze eines erfindungsgemäßen Kraftfahrzeugs 1. Es weist vorliegend zunächst ein ACC-System 2 mit einer Steuereinrichtung 3 auf, die zur Ausführung einer Ausführungsform des erfindungsgemäßen Verfahrens ausgebildet ist. Ferner weist das Kraftfahrzeug 1 auch ein Notbremssystem 4 auf, welches ebenso eine Steuereinrichtung 5 umfasst, die eine andere Ausführungsform des erfindungsgemäßen Verfahrens ausführt.

Beide Steuereinrichtungen sind, insbesondere über einen CAN-Bus, mit anderen Fahrzeugsystemen verbunden, insbesondere Umgebungssensoren, von denen die für die Funktion notwendigen Daten erhalten werden und anzusteuernden System, insbesondere einem Bremssystem und/oder einem Motor. Unter den anderen Fahrzeugsystemen befindet sich auch eine Kommunikationseinrichtung 6, die beispielsweise in ein Radio des Kraftfahrzeugs 1 integriert sein kann. Über die Kommunikationseinrichtung 6 können Daten eines externen, feststehenden Senders 7 empfangen werden, der Teil eines Servers 8 ist. Der Server 8 empfängt zum einen Daten verschiedener Kraftfahrzeuge, insbesondere, falls das Kraftfahrzeug 1 auch zum Senden von Daten ausgebildet ist, auch Daten des Kraftfahrzeugs 1, wobei es sich meist um gegebenenfalls bereits aufbereitete Sensordaten handelt. Ferner hat der Server 8 Zugriff auf weitere Informationsquellen wie beispielsweise das Internet oder einen lokalen Dienst. Aus allen diesen Informationen ermittelt der Server eine ortsbezogene und/oder straßenabschnittsbezogene Verkehrsinformation, die im vorliegenden Fall angibt, ob ein Stau vorliegt und/oder ein Gefahrenfall vorliegt. Ein weiterer Sender 9 ist vorliegend in einer Ampel 10 verbaut, wobei der Sender 9 als Verkehrsinformation den aktuellen Zustand der Ampel 10 an alle umliegenden Verkehrsteilnehmer sendet, mithin broadcastet.

Die jeweiligen Steuereinrichtungen 3 und 5 erhalten nun die von der Kommunikationseinrichtung 6 empfangenen Verkehrsinformationen zur Verfügung gestellt und werten diese aus, um gegebenenfalls eine Umparametrisierung der Fahrerassistenzsysteme 2, 4 zu erlauben.

Dabei zeigt Fig. 2 als eine Übersicht die Funktion des erfindungsgemäßen Verfahrens. In einem Schritt 11 wird die aktuelle Verkehrsinformation durch die Kommunikationseinrichtung 6 empfangen und an die Steuereinrichtungen 3 und 5 weitergeleitet. In einem Schritt 12 wird die aktuelle Verkehrsinformation dann durch die Steuereinrichtungen 3 und 5 ausgewertet, wobei beispielsweise bezüglich von Entfernungen oder auch, falls die Verkehrsinformation auf einer Skala angegeben wird, von Schwellwerten entschieden wird, ob eine Anpassung von Regelungsparametern der Fahrerassistenzsysteme 2, 4 erfolgen soll. Ist dies der Fall, erfolgt diese Anpassung in einem Schritt 13. Das Verfahren wiederholt sich immer dann, wenn eine aktuelle Verkehrsinformation empfangen werden kann.

Im vorliegenden Fall wird dann, wenn ein Stau oder ein Gefahrenfall vorausliegt, also insbesondere auf dem Straßenabschnitt angezeigt wird, auf dem sich das Kraftfahrzeug 1 befindet, für das ACC-System 2 die Eindringtiefe bei einer Annäherung an ein voranfahrendes Fahrzeug auf Null reduziert, eine maximal mögliche Beschleunigung und eine maximal mögliche Bremsverzögerung werden reduziert und eine Einschererkennung wird zur Erkennung schneller Spurwechsel umparametrisiert, indem eine Plausibilisierungsschwelle erniedrigt wird.

Bei dem Notbremssystem 4 wird bei drohender Gefahr aufgrund von Wild, Fußgängern oder Gegenständen auf der Straße oder ebenfalls Stau auch die Parametrisierung geändert, indem Klassifikationsschwellen von stehenden, nicht-überfahrbaren Objekten herabgesetzt werden und Eingriffszeitpunkte und Warnzeitpunkte nach vorn versetzt werden. Bei beiden Systemen wird dann, wenn eine vorausliegende, rot anzeigende Ampel innerhalb einer bestimmten Reichweite angezeigt wird, die Erkennung von stehenden Objekten beschleunigt, insbesondere auch, indem Plausibilisierungsschwellen oder dergleichen heruntergesetzt werden. Wird eine Rotphase einer Ampel angezeigt, so werden ferner das Annäherungsverhalten des ACC-Systems 2 beschreibende Regelparameter so angepasst, dass das Schließen der Lücke zu stehenden Objekten (wartenden Fahrzeugen) langsamer und komfortabler erfolgt, nach die Möglichkeit besteht, sich bei längerer Rotphase "Zeit zu lassen".

Selbstverständlich sind auch noch andere Anpassungen von Parametern für verschiedene Verkehrssituationen denkbar, auf die sich das erfindungsgemäße Verfahren anwenden lässt, um die Funktion auf die spezielle Verkehrssituation hin zu optimieren.

## Patentansprüche

1. Verfahren zum Betrieb eines längsführenden Fahrerassistenzsystems eines Kraftfahrzeugs (1), welches in einem Freifahrbetrieb zur Regelung der Geschwindigkeit eines Kraftfahrzeugs (1) auf eine Wunschgeschwindigkeit und/oder in einem Folgebetrieb zur Regelung der Geschwindigkeit des Kraftfahrzeugs (1) zum Einhalten eines Regelabstands gegenüber einem voranfahrenden Fahrzeug als Regelobjekt ausgebildet ist, wobei wenigstens ein die Regelung beeinflussender Regelungsparameter in Abhängigkeit wenigstens einer die Verkehrsverhältnisse auf der aktuell befahrenden Straße beschreibenden, von einem externen Sender (7, 9) erhaltenen Verkehrsinformation angepasst wird,
**dadurch gekennzeichnet,**
**dass** bei einer einen vorausliegenden Stau oder einen vorausliegenden Gefahrenfall anzeigenden Verkehrsinformation die Eindringtiefe bei einer Annäherung an ein voranfahrendes Fahrzeug reduziert wird und/oder eine maximal mögliche Beschleunigung erniedrigt wird und/oder eine maximal mögliche Bremsverzögerung reduziert wird.

2. Verfahren nach Anspruch 1, **dadurch gekennzeichnet, dass** die Verkehrsinformation mittels einer Kommunikationseinrichtung (6), insbesondere einem Funkempfänger, von dem feststehenden und/oder bewegten Sender (7, 9) empfangen wird.

3. Verfahren nach Anspruch 2, **dadurch gekennzeichnet, dass** als Sender (7) ein Server (8) verwendet wird.

4. Verfahren nach Anspruch 3, **dadurch gekennzeichnet, dass** die Verkehrsinformation auf dem Server (8) unter Berücksichtigung von von wenigstens einem weiteren Kraftfahrzeug empfangenen, gegebenenfalls aufbereiteten Sensordaten ermittelt wird.

5. Verfahren nach einem der vorangehenden Ansprüche, **dadurch gekennzeichnet, dass** eine einen vorausliegenden Stau und/oder einen vorausliegenden Gefahrenfall und/oder den Status einer vorausliegenden Ampel (10) meldende Verkehrsinformation verwendet wird.

6. Verfahren nach einem der vorangehenden Ansprüche, **dadurch gekennzeichnet, dass** als Fahrerassistenzsystem ein Notbremssystem (4) verwendet wird und bei einer einen vorausliegenden Gefahrenfall, insbesondere eine Person und/oder ein Tier und/oder einen Gegenstand auf der Fahrbahn, anzeigenden Verkehrsinformation die Klassifikationschwellen von stehenden, nichtüberfahrbaren Objekten herabgesetzt wird und/oder ein Eingriffszeitpunkt und/oder ein Warnzeitpunkt zu einem früheren Zeitpunkt hin verschoben wird.

7. Verfahren nach einem der vorangehenden Ansprüche, **dadurch gekennzeichnet, dass** bei einer eine vorausliegende rote Ampel (10) anzeigenden Verkehrsinformation eine Plausibilisierungsschwelle für stehende Objekte erniedrigt wird und/oder das Annäherungsverhalten an stehende Objekte beschreibende Regelungsparameter angepasst werden, insbesondere im Hinblick auf eine langsamere und/oder komfortablere Annäherung.

8. Verfahren nach einem der vorangehenden Ansprüche, **dadurch gekennzeichnet, dass** bei einer einen vorausliegenden Stau oder einen vorausliegenden Gefahrenfall anzeigenden Verkehrsinformation ein Regelabstand zu dem voranfahrenden Fahrzeug erhöht wird.

9. Verfahren nach einem der vorangehenden Ansprüche, **dadurch gekennzeichnet, dass** bei einer einen vorausliegenden Stau oder einen vorausliegenden Gefahrenfall anzeigenden Verkehrsinformation eine Einschererkennung zur Erkennung schneller Spurwechsel umparametrisiert wird, wobei eine Plausibilisierungsschwelle erniedrigt wird, so dass ein Spurwechsel bereits bei einer niedrigeren Wahrscheinlichkeit als Regelobjekt plausibel werden kann.

10. Kraftfahrzeug (1), umfassend ein längsführendes Fahrerassistenzsystem (2, 4) mit einer zur Durchführung eines Verfahrens nach einem der vorangehenden Ansprüche ausgebildeten Steuereinrichtung (3, 5).

## Claims

1. Method for operating a longitudinally guiding driver assistance system of a motor vehicle (1), said system being configured in free travel mode to regulate the speed of a motor vehicle (1) to a desired speed and/or in a follow mode to regulate the speed of the motor vehicle (1) so as to maintain a regulated distance from a vehicle travelling ahead as the regulating object, wherein at least one control parameter which influences the regulation is adapted as a function of at least one item of traffic information received from an external transmitter (7, 9) and describing the traffic conditions on the road on which the vehicle is currently travelling,
**characterised in that**
in the event of a traffic jam ahead or a dangerous situation ahead the depth of penetration is reduced as the vehicle moves closer to a vehicle driving ahead of it and/or a maximum possible acceleration is reduced and/or a maximum possible braking deceleration is reduced.

2. Method according to claim 1, **characterised in that** the traffic information is received from the fixed and/or moving transmitter (7, 9) by means of a communication device (6), particularly a radio receiver.

3. Method according to claim 2, **characterised in that** a server (8) is used as the transmitter (7).

4. Method according to claim 3, **characterised in that** the traffic information is determined on the server (8), taking account of data received from at least one other motor vehicle, optionally after processing of the data.

5. Method according to one of the preceding claims, **characterised in that** an item of traffic information reporting a traffic jam ahead and/or a dangerous situation ahead and/or the status of stoplights (10) ahead is used.

6. Method according to one of the preceding claims, **characterised in that** an emergency braking system (4) is used as the driver assistance system and, in the event of an item of traffic information indicating a dangerous situation ahead, particularly a person and/or an animal and/or an object on the carriageway, the classification thresholds of stationary objects which cannot be driven over is lowered and/or an intervention time point and/or a warning time point is moved to an earlier time.

7. Method according to one of the preceding claims, **characterised in that**, if there is traffic information indicating a red stoplight (10) ahead, a plausibility threshold for stationary objects is lowered and/or regulating parameters that describe the characteristics of approach to stationary objects are adjusted, particularly so as to enable a slower and/or more gentle approach.

8. Method according to one of the preceding claims, **characterised in that**, when there is traffic information indicating a traffic jam ahead or a dangerous situation ahead, a regulated distance from the vehicle ahead is increased.

9. Method according to one of the preceding claims, **characterised in that**, when there is traffic information indicating a traffic jam ahead or a dangerous situation ahead, cutting-in detecting means for detecting a rapid lane-change are re-parameterised, while a plausibility threshold is lowered, so that a change of lane can be plausible as a regulating object even with a lower probability.

10. Motor vehicle (1) comprising a longitudinally guiding vehicle assistance system (2, 4) having a control device (3, 5) configured to carry out a method according to one of the preceding claims.

## Revendications

1. Procédé de fonctionnement d'un système d'aide à la conduite longitudinale d'un véhicule automobile (1), lequel système est conçu pour, dans un mode de fonctionnement en conduite libre, réguler la vitesse d'un véhicule automobile (1) sur une vitesse souhaitée et/ou, dans un mode de fonctionnement de suivi, réguler la vitesse du véhicule automobile (1) de manière à respecter une distance réglée par rapport à un véhicule roulant devant considéré comme objet de régulation, au moins un paramètre de régulation qui influence la régulation étant adapté en fonction d'au moins une information de trafic qui décrit les conditions de circulation sur la route actuellement parcourue et qui est obtenue à partir d'un émetteur externe (7, 9),
**caractérisé en ce que**, en présence d'une information de trafic indiquant un embouteillage existant en avant du véhicule ou une situation dangereuse existant en avant du véhicule, on réduit la profondeur de pénétration lors d'un rapprochement du véhicule roulant devant et/ou on diminue une accélération maximale possible et/ou on réduit un retard de freinage maximal possible.

2. Procédé selon la revendication 1, **caractérisé en ce que** l'information de trafic est reçue de l'émetteur (7, 9) stationnaire et/ou mobile au moyen d'un dispositif de communication (6), notamment un récepteur radio.

3. Procédé selon la revendication 2, **caractérisé en ce qu'**un serveur (8) est utilisé comme émetteur (7).

4. Procédé selon la revendication 3, **caractérisé en ce que** l'information de trafic est déterminée sur le serveur (8) en tenant compte de données de capteur reçues d'au moins un autre véhicule automobile et éventuellement préparées.

5. Procédé selon l'une des revendications précédentes, **caractérisé en ce que** l'on utilise une information de trafic signalant un embouteillage existant en avant du véhicule et/ou une situation dangereuse existant en avant du véhicule et/ou l'état de feux de circulation (10) existant en avant du véhicule.

6. Procédé selon l'une des revendications précédentes, **caractérisé en ce que** l'on utilise comme système d'aide à la conduite un système de freinage d'urgence (4) et, en présence d'une information de trafic indiquant une situation dangereuse existant en avant du véhicule, notamment, une personne et/ou un animal et/ou un objet sur la chaussée, on baisse les seuils de classification d'objets immobiles sur lesquels on ne peut pas rouler et/ou on décale vers un instant plus précoce un instant d'intervention et/ou un instant d'avertissement.

7. Procédé selon l'une des revendications précédentes, **caractérisé en ce que**, en présence d'une information de trafic indiquant des feux de circulation (10) au rouge en avant du véhicule, on baisse un seuil de vraisemblance pour la présence d'objets immobiles et/ou on adapte des paramètres de régulation décrivant le comportement d'approche d'objets immobiles, notamment en ce qui concerne une approche plus lente et/ou plus confortable.

8. Procédé selon l'une des revendications précédentes, **caractérisé en ce que**, en présence d'une information de trafic indiquant un embouteillage existant en avant du véhicule et/ou une situation dangereuse existant en avant du véhicule, on augmente une distance réglée par rapport au véhicule roulant devant.

9. Procédé selon l'une des revendications précédentes, **caractérisé en ce que**, en présence d'une information de trafic indiquant un embouteillage existant en avant du véhicule et/ou une situation dangereuse existant en avant du véhicule, on modifie le paramétrage d'une détection de véhicule se rabattant afin de détecter un changement rapide de voie, un seuil de vraisemblance étant abaissé de telle sorte qu'un véhicule changeant de voie peut déjà avec une probabilité inférieure devenir vraisemblable comme objet de régulation.

10. Véhicule automobile (1), comprenant un système d'aide à la conduite longitudinale (2, 4), avec un dispositif de commande (3, 5) conçu pour la mise en oeuvre d'un procédé selon l'une des revendications précédentes.
